# FASCICULE DE BREVET EUROPEEN

(11) **EP 0 454 650 B1**
(45) Date de publication et mention de la délivrance du brevet: **21.12.1994**
(21) Numéro de dépôt: 91870058.4
(22) Date de dépôt: 11.04.1991
(51) Int. Cl.: C10B 53/02

(54) **Procédé de carbonisation et installation pour la mise en oeuvre de ce procédé**
Verfahren und Vorrichtung zur Karbonisierung
Process and installation for carbonizing

(30) Priorité: 20.04.1990 BE 9000439
(43) Date de publication de la demande: 30.10.1991
(73) Titulaire: CARBOBOIS S.A., B-6200 Chatelineau (BE)
(72) Inventeur: Dubois, Francis Jean, B-5032 Bossiere (BE)
(74) Mandataire: Vigneron, Jean

(56) Documents cités:
- CH-A- 217 429
- FR-A- 874 305
- FR-A- 875 122
- FR-A- 882 421

## Description

La présente invention a pour objet un procédé de carbonisation de matières dégageant des gaz combustibles en cours de carbonisation tel que, en particulier, procédé de carbonisation du bois à l'abri de l'air pour l'obtention du charbon de bois, suivant lequel les gaz combustibles dégagés sont récupérés et brûlés pour élever la température du bois.

Les procédés connus généralement utilisés pour la carbonisation du bois se répartissent en deux catégories, à savoir : le procédé industriel mettant en oeuvre de grands fours cornues fixes dans lesquels la carbonisation s'effectue pratiquement de manière continue et le procédé, à caractère artisanal, qui met en oeuvre des fours fixes en terre, en briques ou en tôle, dans lesquels la carbonisation s'effectue de manière discontinue, qui sont généralement implantés, à l'écart des zones habitées, dans les sites où la matière première est immédiatement disponible.

Le procédé mettant en oeuvre les fours cornues précités présente l'inconvénient de réclamer, d'une part, un investissement très important et, d'autre part, une aire d'approvisionnement très étendue en matière première de faible coût. Ces deux facteurs limitent donc fortement l'implantation d'installations pourvues desdits fours cornues.

Par contre, si le procédé qui met en oeuvre les fours artisanaux précités a l'avantage de pouvoir en théorie être utilisé, sans gros investissements, en tout endroit où est présente la matière première, même en quantité limitée, il présente tout d'abord l'inconvénient de voir l'implantation de tels fours strictement réglementée étant donné leur caractère polluant par dégagement abondant de fumées toxiques. De plus, ces fours, à carbonisation lente et qui consomment partiellement leur charge pour sécher et carboniser cette dernière, ont un faible rendement en charbon de bois et entraînent une perte nette de 50 à 75% de l'énergie disponible au départ. Ces fours, qui doivent impérativement être conduits par une main-d'oeuvre extrêmement spécialisée et qui réclament une surveillance quasiment constante, produisent un charbon de bois qui, d'une part, a une qualité fluctuante en fonction de leur conduite et, d'autre part, manque de pureté, vu le déchargement desdits fours à même le sol. Enfin, ces fours, qui se détériorent à la moindre erreur de conduite, se dégradent rapidement du fait qu'ils sont soumis constamment aux intempéries, vu leur obligation de fonctionner à l'air libre pour permettre la dispersion des fumées toxiques qu'ils émettent.

On connaît également, suivant le brevet français N° 882421, un four ou chaque four d'un four double comportant une enveloppe extérieure calorifugée et garnie intérieurement de matière réfractaire dans la zone de chauffage dans laquelle sont disposées deux ou plusieurs cornues mobiles, superposées de telle manière que les gaz de chauffage puissent circuler entre elles et dont le foyer placé à la partie inférieure de l'enveloppe est alimenté principalement par les gaz de distillation provenant de la cornue directement en contact avec le foyer, les gaz de chauffage, après avoir récupéré la chaleur dégagée par la cornue de carbonisation, servant à sécher le bois contenu dans les cornues supérieures.

Ce four simple ou double ne permet pas une production de charbon de bois en continu et réclame, à un moment ou l'autre de son fonctionnement, un apport de chaleur extérieure, les gaz de distillation, en provenance de la cornue en contact avec le foyer, étant brûlés dans ce foyer uniquement pour sécher le bois contenu dans les autres cornues.

L'invention a pour but de remédier à ces inconvénients et de procurer un procédé de carbonisation non polluant qui peut être mis en oeuvre, à l'aide de matériel pouvant être placé sous abri ventilé pour assurer sa longévité et grâce à un investissement à peine supérieur à celui réclamé par les fours artisanaux en tôle, dans n'importe quel endroit où l'on dispose de matière première, par exemple dans des zonings industriels à proximité d'entreprises de traitement du bois. Ce procédé offre l'avantage particulièrement important, outre ceux de permettre, de manière cyclique, une production élevée d'un charbon de bois de qualité constante répondant aux normes les plus sévères et ce, sans faire appel, d'une part, à de la main d'oeuvre qui est nécessaire à la conduite des fours artisanaux et, d'autre part, à une surveillance constante, de réduire de manière extrêmement sensible la perte nette de l'énergie disponible au départ énoncée ci-dessus en utilisant l'énergie des gaz émis lors de la carbonisation d'une charge de bois pour sécher et amener à la température de carbonisation une autre charge de bois.

A cet effet, suivant l'invention, ledit procédé consiste à disposer une charge de bois dans une première enceinte pouvant être fermée et comportant, à sa base, des orifices de passage pour les gaz qui seront générés dans la charge de bois lorsqu'on élèvera la température de cette dernière, à soumettre l'enceinte et sa charge de bois, soit par combustion d'une partie de la charge, contenue dans l'enceinte, soit par un apport de calories fournies extérieurement à l'enceinte par la combustion d'un solide ou fluide combustible d'appoint, à une élévation de température assurant tout d'abord au moins partiellement le séchage de la charge de bois, puis, lorsque la température de la charge est comprise entre 250° et 300°C, le début de la carbonisation de la charge qui s'effectue à l'abri de l'air et qui dégage les gaz combustibles susdits qui s'échappent par les orifices précités de l'enceinte, à interrompre l'apport de calories susdit, à amener au contact des gaz s'échappant de l'enceinte de l'air en quantité suffisante pour réaliser un mélange air/gaz s'enflammant spontanément, à canaliser le mélange enflammé et les gaz chauds résultant de la combustion du mélange au contact d'au moins une partie importante de la surface des parois de l'enceinte pour porter progressivement la charge contenue dans cette dernière à une température comprise entre 450° et 550°C, à superposer à la première enceinte susdite, au moins à partir du moment où l'on interrompt l'apport de calories précité à cette dernière, une deuxième enceinte, semblable à la première, contenant une charge de bois, à canaliser les gaz chauds s'écoulant le long des parois de la première enceinte pour qu'ils s'écoulent au contact d'au moins une partie importante de la surface des parois de la deuxième enceinte afin de sécher au moins partiellement la charge de cette dernière et l'amener à une température, comprise entre 250° et 300°C, à laquelle se produit le début de carbonisation et l'émission de gaz combustibles, à amener au contact des gaz s'échappant de la deuxième enceinte de l'air pour réaliser le mélange air/gaz susdit s'enflammant spontanément, à séparer les première et deuxième enceintes, à superposer à la deuxième enceinte une troisième enceinte semblable aux deux autres afin que ces deuxième et troisième enceintes reproduisent le même cycle que celui des première et deuxième enceintes, à étouffer automatiquement la carbonisation de la charge de la première enceinte grâce aux gaz résiduels présents dans cette dernière et par absence d'air dans l'enceinte, l'entrée d'air étant pratiquement nulle par les orifices ménagés à la base de l'enceinte pour l'évacuation des gaz générés par la charge lors de l'élévation de température de celle-ci, à décharger le charbon de bois après étouffement et refroidissement de la première enceinte et de son contenu, à charger de bois la première enceinte, à la superposer à la troisième enceinte, à séparer celle-ci de la deuxième enceinte pour que cette dernière entre dans sa phase étouffement, refroidissement, décharge et charge et ainsi de suite.

L'invention a également pour objet une installation pour la mise en oeuvre du procédé susdit, cette dernière pouvant soit être aisément déplacée pour être disposée à proximité d'une nouvelle source de matière première lorsque la source utilisée est tarie, soit voir facilement et économiquement sa capacité de production accrue en multipliant le nombre des éléments recevant les charges soumises à carbonisation.

Suivant l'invention, ladite installation comprend au moins trois enceintes semblables, mobiles et interchangeables qui sont agencées pour que la carbonisation s'effectue à l'abri de l'air et qui présentent chacune une ouverture obturable pour l'enfournement de la charge à soumettre à carbonisation et le défournement du charbon de bois, des orifices,régulièrement répartis, ménagés à proximité de leur base pour autoriser l'échappement des gaz produits par la charge lorsqu'on élève la température de celle-ci, des moyens disposés à l'extérieur de l'enceinte, à proximité des orifices précités et agencés pour, d'une part, distribuer de l'air dans le flux de gaz s'échappant de l'enceinte par lesdits orifices et, d'autre part, assurer le mélange intime air/gaz, des moyens pour guider ce mélange qui s'enflamme spontanément et les gaz chauds produits par sa combustion, le long des parois de l'enceinte, l'installation comprenant des moyens pour la manutention des enceintes qui sont agencés notamment pour superposer les enceintes et séparer les enceintes qui sont superposées.

Suivant un mode de réalisation avantageux de l'invention, les enceintes ont la forme générale d'un parallélipipède droit, deux parois latérales opposées de chaque enceinte étant planes, carrées ou rectangulaires et leur hauteur correspondant à la hauteur de l'enceinte, les deux autres parois latérales de l'enceinte, également planes et rectangulaires, ayant une hauteur inférieure à celle des deux parois latérales précitées, le fond de l'enceinte étant constitué par deux parois planes, égales et rectangulaires qui sont inclinées, suivant un même angle, vers la base de l'enceinte pour former une trémie et qui se raccordent à la base des deux parois latérales opposées de plus faible hauteur et aux deux autres parois latérales, un espace subsistant entre ces parois inclinées le long de leur bord inférieur, cet espace étant fermé par une cornière, dont la section prise parallèlement aux parois latérales de plus grande hauteur, est en forme de V ayant son arête située à un niveau inférieur au niveau des bords inférieurs des parois inclinées, les orifices d'échappement des gaz précités étant régulièrement répartis et alignés en au moins une rangée dans chacune des ailes de cette cornière, les moyens précités distribuant l'air étant constitués par deux paires de rampes fixes s'étendant entre les parois latérales de plus grande hauteur et disposées parallèlement à l'arête de la cornière, les rampes de la première paire étant agencées en dessous de la cornière susdite, de part et d'autre et équidistantes de cette dernière, les ouvertures de ces rampes étant régulièrement réparties et alignées en au moins une rangée et ayant leur axe choisi de manière à diriger l'air transversalement au flux de gaz s'échappant des deux rangées d'orifices présentés par la cornière susdite, les rampes de la seconde paire étant disposées en dessous des parois inclinées, à proximité de leur intersection avec les parois latérales susdites de plus faible hauteur, leurs ouvertures, analogues à celles de la première paire, ayant respectivement leur axe sensiblement parallèle à l'axe des ouvertures des rampes de la première paire, l'enceinte, totalement ouverte à son sommet pour faciliter l'enfournement et le défournement de la charge, étant obturée, de manière hermétique, par un couvercle amovible agencé de manière à pouvoir être verrouillé en position de fermeture.

Suivant une forme de réalisation particulièrement avantageuse de l'invention, les moyens précités, agencés pour guider le mélange air/gaz enflammé et les gaz chauds produits par sa combustion le long des parois de l'enceinte, sont constitués par une cloche destinée à coiffer entièrement une enceinte lorsque cette dernière est en phase de séchage et en phase carbonisation de sa charge, de sorte que l'installation comprend, pour au moins trois enceintes, deux cloches semblables pouvant être superposées de manière à pouvoir coopérer avec deux enceintes superposées, chacune de ces cloches présentant, à sa partie supérieure, une ouverture centrée pour soit permettre le passage et la répartition des gaz chauds de la cloche inférieure dans la cloche supérieure lorsque les cloches sont superposées, soit permettre l'échappement, vers l'athmosphère, des gaz après qu'ils aient transmis leurs calories à l'enceinte logée dans la cloche supérieure, des ouvertures étant prévues dans les cloches pour livrer passage aux moyens prévus sur les enceintes pour distribuer l'air nécessaire au mélange air/gaz précité, ainsi que des ouvertures obturables livrant temporairement passage aux moyens précités alimentés par une source d'énergie d'appoint et agencés pour élever la température de l'enceinte et celle de la charge qu'elle contient.

D'autres détails et particularités de l'invention ressortiront de la description des dessins annexés qui, à titre d'exemples non limitatifs, illustrent le procédé suivant l'invention et une forme de réalisation particulière de l'installation pour la mise en oeuvre de ce procédé.

Les figures 1 à 16 sont des vues schématiques en élévation illustrant les phases de démarrage du procédé suivant l'invention (figures 1 à 3), les phases du premier cycle de carbonisation (figures 4 à 9) ainsi que les phases du deuxième cycle de carbonisation (figures 10 à 16), ces dernières se reproduisant de manière identique lors des cycles suivants.

La figure 17 est une vue schématique, en élévation, et avec brisures partielles, montrant une enceinte dans laquelle se produit la carbonisation, cette enceinte étant équipée d'une cloche isolant l'enceinte et guidant le mélange air/gaz enflammé et les gaz chauds produits par ce mélange au contact des parois de l'enceinte.

La figure 18 est une vue de profil, avec brisures partielles, correspondant à la figure 17.

La figure 19 est une vue en coupe, suivant la ligne XIX-XIX de la figure 18, montrant, à grande échelle, un détail de l'enceinte.

La figure 20 est une vue partielle, suivant la ligne XX-XX de la figure 19, montrant un détail des rampes à air.

Dans les différentes figures, les mêmes notations de référence désignent des éléments identiques ou analogues.

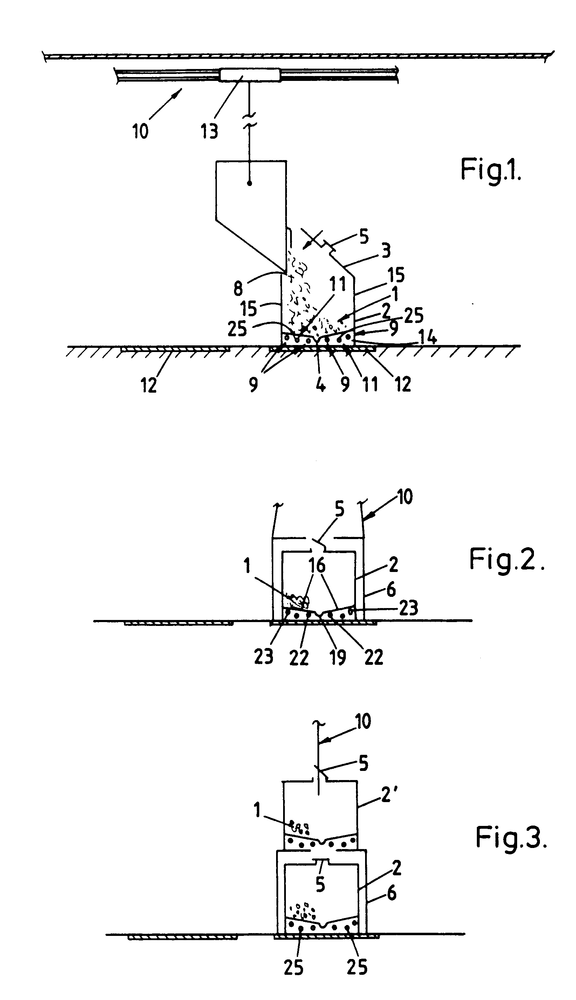

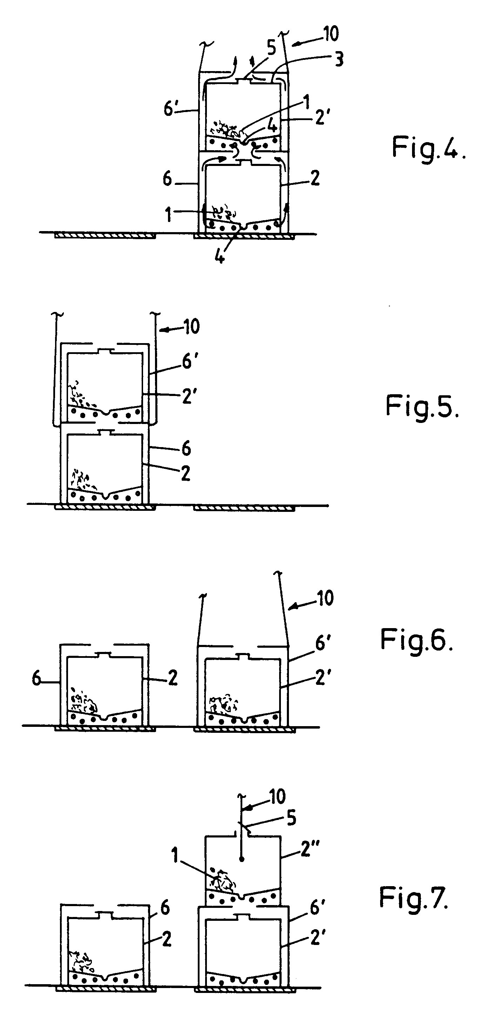

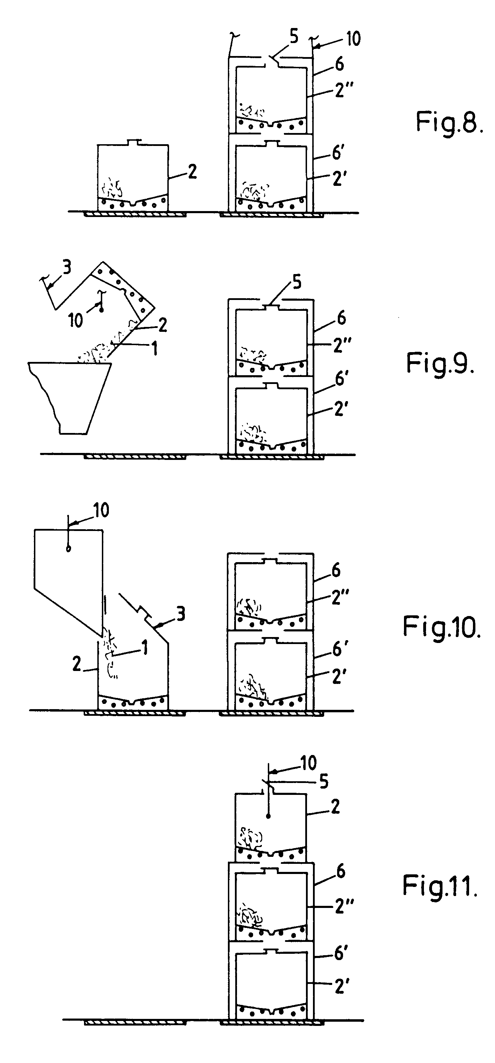

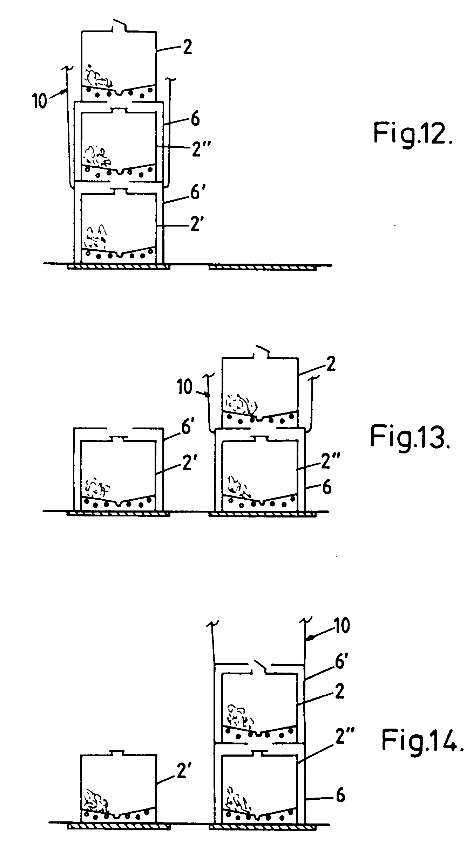

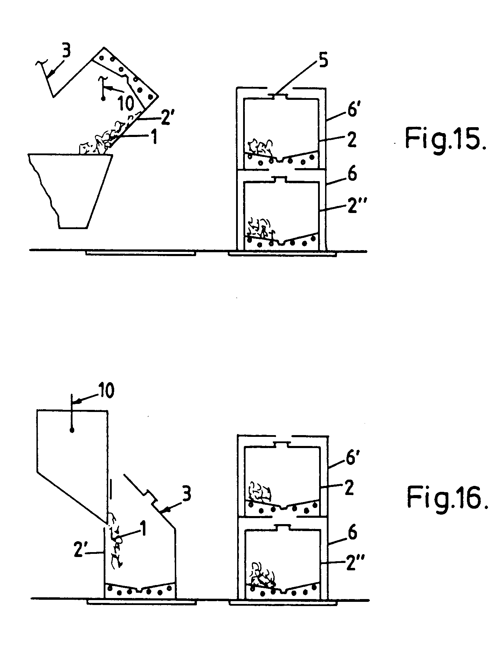

Le procédé suivant l'invention et illustré aux dessins consiste à disposer une charge de bois 1 (voir figure 1) dans une première enceinte 2 pouvant être fermée par un couvercle 3 et comportant à sa base, des orifices de passage 4 pour les gaz qui seront générés dans la charge de bois lorsqu' on élèvera la température de cette dernière, à soumettre l'enceinte 2 et sa charge de bois 1, soit par combustion d'une partie de la charge 1 dans l'enceinte 2, soit par un apport de calories fourni extérieurement à l'enceinte 2 par la combustion d'un solide ou fluide combustible, à une élévation de température assurant tout d'abord au moins partiellement le séchage de la charge de bois, puis, lorsque la température de la charge est comprise entre 250° et 300°C, le début de la carbonisation de la charge qui s'effectue à l'abri de l'air et qui dégage des gaz combustibles susdits qui s'échappent par les orifices 4 de l'enceinte, à interrompre l'apport de calories susdit, à amener au contact des gaz s'échappant de l'enceinte de l'air en quantité suffisante pour réaliser un mélange air/gaz s'enflammant spontanément, à canaliser le mélange enflammé et les gaz chauds résultant de la combustion du mélange au contact d'au moins une partie importante de la surface des parois de l'enceinte pour porter progressivement la charge contenue dans cette dernière à une température comprise entre 450° et 550°C (voir figure 2), à superposer à la première enceinte 2, au moins à partir du moment où l'on interrompt l'apport de calories précité à cette dernière, une deuxième enceinte 2′, analogue à la première, contenant une charge de bois (voir figure 3), à canaliser les gaz chauds s'écoulant le long des parois de la première enceinte 2 pour qu'ils s'écoulent au contact d'au moins une partie importante de la surface des parois de la deuxième enceinte 2′ afin de sécher au moins partiellement la charge de cette dernière et l'amener à une température, comprise entre 250° et 300°C, à laquelle se produit le début de carbonisation et l'émission de gaz combustibles (voir figure 4), à amener au contact des gaz s'échappant de la deuxième enceinte 2′ de l'air pour réaliser le mélange air/gaz susdit s'enflammant spontanément, à séparer les première et deuxième enceintes 2 et 2′ (voir figures 5 et 6), à superposer à la deuxième enceinte 2′ une troisième enceinte 2˝ analogue aux deux autres (voir figure 7) afin que ces deuxième et troisième enceintes 2′ et 2˝ reproduisent le même cycle que celui des première et deuxième enceintes 2 et 2′, à étouffer automatiquement la carbonisation de la charge de la première enceinte 2 (voir figure 8) grâce aux gaz résiduels présents dans cette dernière et par absence d'air dans l'enceinte, l'entrée d'air étant pratiquement nulle par les orifices 4 ménagés à la base de l'enceinte pour l'évacuation des gaz générés par la charge lors de l'élévation de température de celle-ci (voir figure 8), à décharger le charbon de bois après étouffement et refroidissement de la première enceinte 2 et de son contenu (voir figure 9), à charger de bois la première enceinte 2 (voir figure 10), à la superposer à la troisième enceinte 2˝ (voir figure 11), à séparer cette dernière de la deuxième enceinte 2′ (voir figure 12 et 13) pour que celle-ci entre dans sa phase étouffement, refroidissement (voir figure 14), décharge (voir figure 15) et charge (voir figure 16). Le cycle complet de carbonisation d'une charge tel que représenté aux figures 11 à 16 peut se reproduire, sans interruption, soit sans brûler une partie de la charge, soit sans apport d'énergie d'appoint, pour autant que la phase d'étouffement, de refroidissement, de décharge et de charge soit suffisamment courte pour que l'enceinte, pourvue d'une nouvelle charge de bois puisse, d'une part, être superposée à une enceinte dont la charge est encore en cours de carbonisation et, d'autre part, que la charge de bois de cette nouvelle enceinte puisse être au moins partiellement séchée et portée à une température comprise entre 250° et 300°C. Dans le cas où la phase d'étouffement, de refroidissement, de décharge et de charge susdite ne répondrait pas à cette condition, il suffirait d'augmenter le nombre d'enceintes prévu ci-dessus d'une ou plusieurs unités suivant la durée de la phase précitée et d'utiliser cette ou ces enceintes supplémentaires pour éviter que le procédé décrit ci-dessus soit interrompu.

Pour améliorer le séchage de la charge 1 d'une enceinte, on libère la vapeur produite par cette charge 1, lors de l'élévation de sa température, en 5 et au sommet de l'enceinte dont la charge est en cours de séchage et ce, au moins jusqu'au moment où l'humidité encore présente dans la charge est de l'ordre de 10% du poids sec de la charge.

Pour utiliser au maximum les calories produites lors du démarrage du procédé et en cours de carbonisation des charges 1, on prévoit deux cloches isolantes 6 qui sont ouvertes à leur partie supérieure et qui peuvent être associées chacune à une enceinte 2. Ces cloches qui sont superposables, constituent, quand deux enceintes munies de leur cloche sont superposées, une cheminée 7 enveloppant les enceintes et dans laquelle sont canalisés le mélange air/gaz enflammé précité ainsi que les gaz chauds résultant de la combustion de ce mélange. Pour éviter d'avoir recours à des ventilateurs, on détermine l'espace compris entre les enceintes 2 et les cloches 6 pour constituer une cheminée 7 dans laquelle on obtient un tirage naturel suffisant qui assure un mouvement ascensionnel satisfaisant du mélange et des gaz précités et qui crée un appel d'air qui varie en fonction de la quantité et de la pression des gaz s'échappant des orifices 4 des enceintes. On prévoit le réglage de l'admission d'air dans les cloches 6, de telle sorte que la combustion du mélange précité s'effectue en excès d'air et ce, d'une part, afin de régler la vitesse de carbonisation en fonction des caractéristiques de la charge 1 et de la qualité de charbon de bois désirée et, d'autre part, afin que les gaz rejetés dans l'atmosphère, au sommet des cloches superposées, soient inoffensifs. On obtient de bons résultats en choisissant une cloche 6 dont le volume est de l'ordre de 1,6 fois le volume d'une enceinte 2.

L'installation pour la mise en oeuvre du procédé précité comprend, comme montré aux figures 1 à 16, au moins trois enceintes 2, 2′ et 2˝ qui sont semblables, mobiles et interchangeables et qui sont agencés pour que la carbonisation de leur charge 1 s'effectue à l'abri de l'air. Ces enceintes présentent chacune une ouverture 8 obturable pour permettre d'y introduire la charge 1 et d'en extraire le charbon de bois après carbonisation de la charge, ainsi que les orifices 4 précités, alignés et régulièrement répartis, qui sont ménagés à proximité de leur base pour autoriser l'échappement des gaz combustibles produits par la charge lorsque la charge est au moins partiellement séchée et que sa température est suffisamment élevée, des moyens 9, disposés à l'extérieur de l'enceinte et à proximité des orifices 4, agencés pour, d'une part, distribuer de l'air dans le flux de gaz combustibles s'échappant des orifices 4 et qui s'enflamment spontanément au contact de l'air et d'autre part, assure le mélange intime air/gaz. L'installation comprend, en outre, des moyens 6, tels que les deux cloches précitées, destinés à être associés aux enceintes pour guider le mélange air/gaz enflammé et les gaz chauds produits par sa combustion, le long des parois des enceintes, ainsi que des moyens 10 agencés pour assurer mécaniquement la manutention des enceintes 2, 2′ et 2˝ et des moyens 6, 6′ lorsqu'on les superpose et les sépare et les manutentions de chargement et de déchargement desdites enceintes. Chacune des enceintes susdites présente, à sa partie supérieure, au moins une trappe obturable 5 destinée à permettre, lorsqu'elle est ouverte pendant la phase de séchage de la charge, l'échappement de la vapeur produite par cette charge. Pour permettre le démarrage du procédé sans brûler une partie de la charge de la première enceinte mise en oeuvre, au moins une des enceintes, et de préférence chacune de ces dernières, comprend, extérieurement et à proximité de sa base, des moyens 11, constitués par exemple par des rampes à gaz fixes ou des brûleurs à mazout amovibles. Ces moyens sont alimentés par une source d'énergie d'appoint et sont disposés de manière à permettre l'élévation de la température de la première enceinte mise en oeuvre et de sa charge pendant la phase de séchage de cette dernière et jusqu'au moment où sa température est suffisante pour que l'émission des gaz combustibles susdits se produise. L'installation est aménagée sur une aire plane, avantageusement bétonnée, comportant un revêtement réfractaire 12 aux endroits où sont posées les enceintes portées à température. Ces moyens de manutention 10 précités sont avantageusement constitués par un pont routant 13, ce dernier et l'aire étant couverts pour abriter l'installation des intempéries.

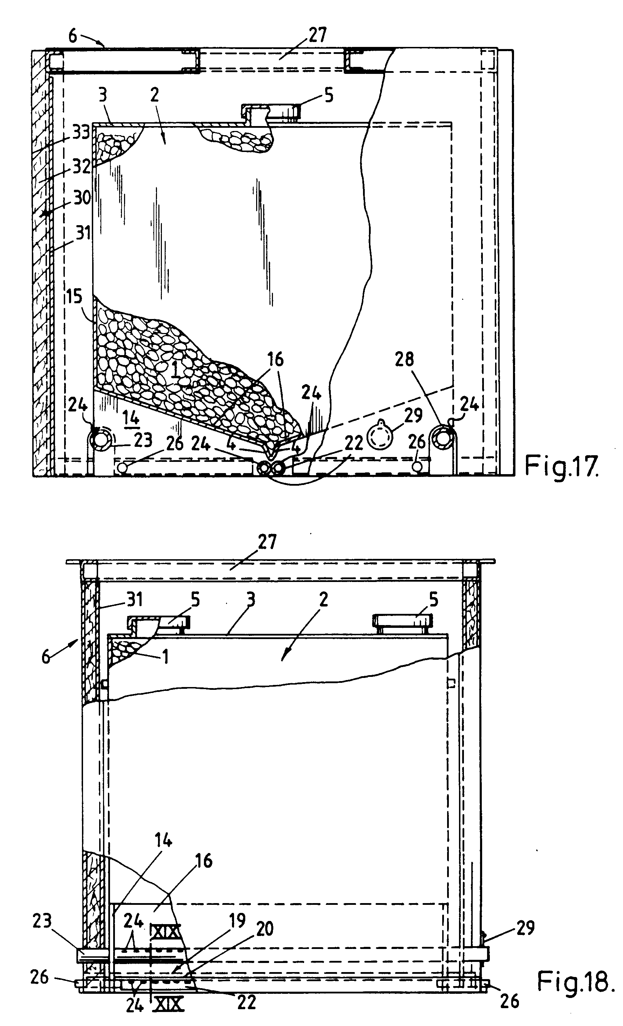

Dans la forme de réalisation des enceintes 2, 2′ et 2˝ illustrée à la figure 17, celles-ci ont la forme générale d'un parallélipipède droit, deux parois latérales 14 opposées de chaque enceinte étant planes, carrées ou rectangulaires et leur hauteur correspondant à la hauteur de l'enceinte pour que celle-ci puisse reposer sur l'aire précitée. Les deux autres parois latérales 15 de l'enceinte, également planes et rectangulaires, ayant une hauteur inférieure à celle des deux parois latérales 14, le fond de l'enceinte étant constitué par deux parois 16 planes, égales et rectangulaires qui sont inclinées, suivant un même angle, vers la base de l'enceinte, pour former une trémie et qui se raccordent à la base des deux parois latérales opposées 15, de plus faible hauteur, et aux deux autres parois latérales 14, un espace 17 subsistant entre ces parois inclinées 16, le long de leur bord inférieur 18. Cet espace 17 est fermé par une cornière 19, dont sa section prise parallèlement aux parois latérales 14, est en forme de V ayant sont arrête 20 située à un niveau inférieur au niveau des bords inférieurs 18 des parois inclinées 16. Les orifices d'échappement 4 des gaz combustibles précités sont régulièrement répartis et alignés en une rangée dans chacune des ailes 21 de la cornière 19. Les moyens 9 précités distribuant l'air dans le flux de gaz combustible s'échappant des orifices 4 sont constitués par deux paires de rampes fixes 22 et 23 s'étendant entre les parois latérales 14 susdites et disposées parallèlement à l'arête 20 de la cornière. Les rampes 22 de la première paire sont agencées en dessous de la cornière 19, de part et d'autre et équidistantes de l'arête 20 de cette dernière. Les ouvertures de ces rampes 22 sont régulièrement réparties et alignées en une rangée et ont leur axe qui est choisi de manière à diriger l'air transversalement au flux de gaz combustible s'échappant de chacune des deux rangées d'orifices 4 présentés par la cornière 19. Les rampes 23 de la seconde paire de rampes sont disposées en dessous des parois inclinées 16, à proximité de leur intersection avec les parois latérales 15 susdites. Les ouvertures de ces rampes 23, analogues à celles de la première paire, ont respectivement leur axe qui est sensiblement parallèle à l'axe des ouvertures 24 des rampes de la première paire. L'enceinte, qui est totalement ouverte à son sommet pour faciliter l'enfournement et le défournement de la charge est obturée, de manière hermétique, par un couvercle amovible et verrouillable en position fermée. Ce dernier comporte deux trappes 5 qui permettent l'échappement de vapeur de l'enceinte lors de la phase de séchage de la charge. Ces trappes sont, d'une part, alignées pour que, lorsque le couvercle est fermé, leur axe soit situé dans un plan vertical passant par l'arête 20 de la cornière 19, et, d'autre part, verrouillables lorsqu'elles sont en position de fermeture.

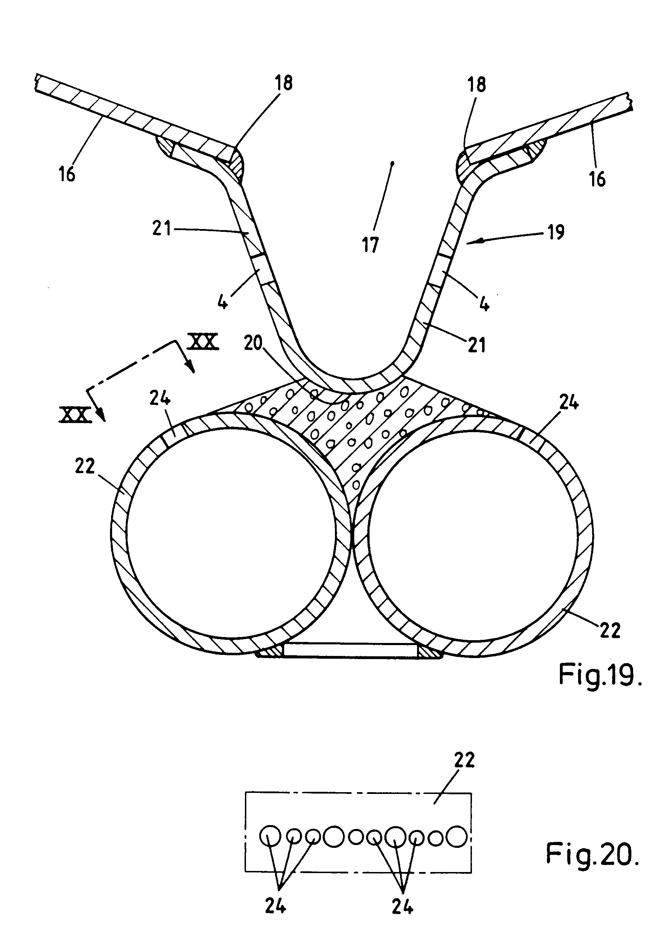

Les rampes d'air 22 et 23 sont agencées de manière à permettre le débit d'air pour régler la vitesse de carbonisation et pour que les gaz combustibles susdits brûlent dans un excès d'air. Ce réglage, non représenté aux dessins, peut, par exemple, être constitué soit par un embout d'ouverture réglable agencé à l'extrémité d'entrée des rampes à air 22 et 23, soit par un tube coaxial situé à l'intérieur desdites rampes et pouvant tourner autour de son axe, pour obturer partiellement les ouvertures 24 des rampes. Ces ouvertures 24 ont avantageusement, comme montré à la figure 20, des sections qui varient à intervalles réguliers et ce, afin de créer des turbulences dans l'air distribué pour obtenir le mélange intime air/gaz combustibles et air chaud.

Les moyens 11 précités agencés pour élever la température de la première enceinte 2, et de sa charge 1, utilisée lors du démarrage du procédé susdit et jusqu'à l'émission par la charge des gaz combustibles précités, sont constitués soit, comme montré à la figure 1, par deux rampes à gaz fixes 25 disposées parallèlement aux rampes à air susdites en dessous des parois inclinées 16 précitées et pouvant être raccordées, de manière amovible à une conduite d'alimentation en gaz, soit par des brûleurs à mazout amovibles se fixant dans des ouvertures obturables ménagées dans les parois latérales 14 de l'enceinte, en dessous desdites parois inclinées 16.

Les deux cloches 6 comprises dans l'installation est destinées à coiffer deux des enceintes 2, 2′ et 2˝ lorsque celles-ci sont en phase de séchage et en phase de carbonisation, sont semblables. Ces cloches peuvent être superposées de manière à ce qu'elles puissent coopérer avec deux enceintes superposées. Ces cloches sont pourvues de broches mobiles 26 (voir figure 18) pouvant être engagées dans les parois 14 de l'enceinte afin d'assembler temporairement cloche et enceinte afin de pouvoir manoeuvrer l'ensemble à l'aide des moyens 10 précités. Chacune de ces cloches 6 présente, à sa partie supérieure, une ouverture centrée 27, dégageant les trappes 5, pour soit permettre le passage et la répartition des gaz chauds de la cloche inférieure dans la cloche supérieure lorsque les deux cloches sont superposées, soit permettre l'échappement, vers l'atmosphère, des gaz après qu'ils aient transmis leurs calories à l'enceinte logée dans la cloche supérieure. Des ouvertures 28 sont prévues dans les cloches 6 pour livrer passage aux moyens 9 prévus sur les enceintes pour distribuer l'air nécessaire au mélange air/gaz précité, ainsi que des ouvertures obturables 29 livrant temporairement passage aux moyens 11 précités alimentés par une source d'énergie d'appoint et agencés pour élever la température de l'enceinte et celle de la charge qu'elle contient, lors du démarrage du procédé. Comme montré aux dessins, les cloches 6 en forme de parallélipipède droit et leurs dimensions intérieures sont telles qu'un espace important, destiné au passage du mélange air/gaz enflammé et aux gaz chauds produits par la combustion dudit mélange, subsiste entre les faces internes de la cloche et les parois latérales 15 de l'enceinte qui sont parallèles aux rampes à air 22 et 23, ainsi qu'entre ces faces internes et le couvercle 3 de l'enceinte. L'ouverture centrée 27 susdite est réalisée dans la paroi supérieure de la cloche. Cette ouverture, de forme rectangulaire, s'étend suivant une direction parallèle aux rampes à air 22 et 23, sur pratiquement toute la dimension correspondante de la paroi supérieure de la cloche, l'autre dimension de l'ouverture étant au moins égale au double de la distance séparant les faces internes de la cloche, d'une part, des parois latérales 15 précitées de l'enceinte et, d'autre part, du couvercle 3 de l'enceinte. Cette distance, qui est pratiquement constante, et la section de l'ouverture 27 ménagée dans la paroi supérieure de la cloche sont telles que la cloche fonctionne à la manière d'une cheminée dans laquelle s'établit le tirage naturel précité.

Les parois latérales 30 de la cloche 6, qui sont parallèles aux parois 15 des enceintes 2, 2′ et 2˝, ont leur face interne qui est garnie d'une couche de matériau réfractaire 31, cette dernière étant avantageusement doublée, sur sa face opposée à l'enceinte, d'une couche de laine de verre 32 revêtue d'une tôle de protection 33.

Pour accélérer le refroidissement des enceintes 2, 2′ et 2˝ et de leur charge, ainsi que pour assurer leur longévité, celles-ci sont avantageusement réalisées à l'aide de tôles d'acier soudées, rigidifiées par des profilés métalliques. On adopte également, pour les cloches 6, une structure métallique.

Il doit être entendu que l'invention n'est nullement limitée aux formes de réalisation décrites et que bien des modifications peuvent être apportées à ces dernières sans sortir du cadre du présent brevet.

## Revendications

1. Procédé de carbonisation de matières dégageant des gaz combustibles en cours de carbonisation tel que, en particulier, procédé de carbonisation du bois à l'abri de l'air pour l'obtention du charbon de bois, suivant lequel les gaz combustibles dégagés sont récupérés et brûlés pour élever la température du bois, ledit procédé étant caractérisé en ce qu'il consiste à disposer une charge de bois (1) dans une première enceinte (2) pouvant être fermée et comportant, à sa base, des orifices de passage (4) pour les gaz qui seront générés dans la charge de bois lorsqu'on élèvera la température de cette dernière, à soumettre l'enceinte (2) et sa charge de bois (1), soit par combustion d'une partie de la charge, contenue dans l'enceinte, soit par un apport de calories fournies extérieurement à l'enceinte par la combustion d'un solide ou fluide combustible d'appoint, à une élévation de température assurant tout d'abord au moins partiellement le séchage de la charge de bois, puis, lorsque la température de la charge est comprise entre 250° et 300°C, le début de la carbonisation de la charge qui s'effectue à l'abri de l'air et qui dégage les gaz combustibles susdits qui s'échappent par les orifices (4) précités de l'enceinte, à interrompre l'apport de calories susdit, à amener au contact des gaz s'échappant de l'enceinte de l'air en quantité suffisante pour réaliser un mélange air/gaz s'enflammant spontanément, à canaliser le mélange enflammé et les gaz chauds résultant de la combustion du mélange au contact d'au moins une partie importante de la surface des parois de l'enceinte pour porter progressivement la charge contenue dans cette dernière à une température comprise entre 450° et 550°C, à superposer à la première enceinte (2) susdite, au moins à partir du moment où l'on interrompt l'apport de calories précité à cette dernière, une deuxième enceinte (2'), semblable à la première, contenant une charge de bois, à canaliser les gaz chauds s'écoulant le long des parois de la première enceinte (2) pour qu'ils s'écoulent au contact d'au moins une partie importante de la surface des parois de la deuxième enceinte (2') afin de sécher au moins partiellement la charge de cette dernière et l'amener à une température, comprise entre 250° et 300°C, à laquelle se produit le début de carbonisation et l'émission de gaz combustibles, à amener au contact des gaz s'échappant de la deuxième enceinte (2') de l'air pour réaliser le mélange air/gaz susdit s'enflammant spontanément, à séparer les première et deuxième enceintes (2 et 2'), à superposer à la deuxième enceinte (2') une troisième enceinte (2'') semblable aux deux autres afin que ces deuxième et troisième enceintes (2' et 2'') reproduisent le même cycle que celui des première et deuxième enceintes (2 et 2'), à étouffer automatiquement la carbonisation de la charge de la première enceinte (2) grâce aux gaz résiduels présents dans cette dernière et par absence d'air dans l'enceinte, l'entrée d'air étant pratiquement nulle par les orifices (4) ménagés à la base de l'enceinte pour l'évacuation des gaz générés par la charge lors de l'élévation de température de celle-ci, à décharger le charbon de bois après étouffement et refroidissement de la première enceinte (2) et de son contenu, à charger de bois la première enceinte (2), à la superposer à la troisième enceinte (2''), à séparer celle-ci de la deuxième enceinte (2') pour que cette dernière entre dans sa phase étouffement, refroidissement, décharge et charge et ainsi de suite.

2. Procédé suivant la revendication 1, caractérisé en ce qu'on libère, au sommet des enceintes dont la charge est en cours de séchage et pendant la phase de séchage au moins jusqu'au moment où l'humidité de cette charge est de l'ordre de 10% du poids sec, la vapeur produite par la charge lors de l'élévation de sa température.

3. Procédé suivant l'une ou l'autre des revendications 1 et 2, caractérisé en ce qu'on isole deux enceintes pendant qu'elles sont superposées pour assurer le séchage et la carbonisation de leur charge de manière à constituer une cheminée enveloppant lesdites enceintes et que l'on canalise le mélange air/gaz enflammé susdit et les gaz chauds précités résultant de la combustion dudit mélange dans la cheminée (7) subsistant entre les enceintes et leur isolation.

4. Procédé suivant la revendication 3, caractérisé en ce qu'on détermine l'espace compris entre les deux enceintes (2) superposées et leur isolation (6) afin de constituer une cheminée (7) dans laquelle on obtient un tirage naturel suffisant pour, d'une part, assurer un mouvement ascensionnel satisfaisant du mélange air/gaz enflammé et des gaz chauds précités et, d'autre part, créer un appel d'air proportionnel à la quantité et à la pression des gaz s'échappant des enceintes par les orifices (4) précités.

5. Procédé suivant l'une quelconque des revendications 1 à 4, caractérisé en ce qu'on règle l'admission d'air dans le mélange air/gaz et dans les gaz chauds précités.

6. Procédé suivant la revendication 5, caractérisé en ce qu'on règle l'admission d'air pour que la combustion du mélange air/gaz se produise en excès d'air.

7. Installation pour la mise en oeuvre du procédé suivant l'une quelconque des revendications 1 à 6, caractérisée en ce qu'elle comprend au moins trois enceintes (2, 2' et 2'') semblables, mobiles et interchangeables qui sont agencées pour que la carbonisation s'effectue à l'abri de l'air et qui présentent chacune une ouverture obturable (8) pour l'enfournement de la charge à soumettre à carbonisation et le défournement du charbon de bois, des orifices (4), régulièrement répartis, ménagés à proximité de leur base pour autoriser l'échappement des gaz produits par la charge lorsqu'on élève la température de celle-ci, des moyens (9) disposés à l'extérieur de l'enceinte, à proximité des orifices (4) précités et agencés pour, d'une part, distribuer de l'air dans le flux de gaz s'échappant de l'enceinte par lesdits orifices et, d'autre part, assurer le mélange intime air/gaz, des moyens (6, 6') pour guider ce mélange qui s'enflamme spontanément et les gaz chauds produits par sa combustion, le long des parois de l'enceinte, l'installation comprenant des moyens (10) pour la manutention des enceintes (2, 2' et 2'') qui sont agencés notamment pour superposer les enceintes et séparer les enceintes qui sont superposées.

8. Installation suivant la revendication 7, caractérisée en ce qu'au moins une des enceintes (2, 2' et 2'') comprend extérieurement, à proximité de sa base, des moyens (11), destinés à être alimentés par une source d'énergie d'appoint et agencés pour élever la température de l'enceinte et celle de la charge qu'elle contient.

9. Installation suivant l'une ou l'autre des revendications 7 et 8, caractérisée en ce que chacune des enceintes (2, 2' et 2'') comprend, à sa partie supérieure, au moins une trappe obturable (5) destinée à permettre, lorsqu' elle est ouverte, l'échappement d'au moins une partie de la vapeur produite pendant la phase de séchage de la charge qui précède la carbonisation de cette dernière.

10. Installation suivant l'une quelconque des revendications 7 à 9, caractérisée en ce que les enceintes ont la forme générale d'un parallélipipède droit, deux parois latérales opposées (14) de chaque enceinte étant planes, carrées ou rectangulaires et leur hauteur correspondant à la hauteur de l'enceinte, les deux autres parois latérales (15) de l'enceinte, également planes et rectangulaires, ayant une hauteur inférieure à celle des deux parois latérales (14) précitées, le fond de l'enceinte étant constitué par deux parois (16) planes, égales et rectangulaires qui sont inclinées, suivant un même angle, vers la base de l'enceinte pour former une trémie et qui se raccordent à la base des deux parois latérales opposées (15) de plus faible hauteur et aux deux autres parois latérales (14), un espace (17) subsistant entre ces parois inclinées (16) le long de leur bord inférieur (18), cet espace (17) étant fermé par une cornière (19), dont la section prise parallèlement aux parois latérales (14) de plus grande hauteur, est en forme de V ayant son arête (20) située à un niveau inférieur au niveau des bords inférieurs (18) des parois inclinées (16), les orifices d'échappement (4) des gaz précités étant régulièrement répartis et alignés en au moins une rangée dans chacune des ailes (21) de cette cornière, les moyens précités distribuant l'air étant constitués par deux paires de rampes fixes (22 et 23) s'étendant entre les parois latérales de plus grande hauteur et disposées parallèlement à l'arête (20) de la cornière, les rampes (22) de la première paire étant agencées en dessous de la cornière (19) susdite, de part et d'autre et équidistantes de cette dernière, les ouvertures de ces rampes (22) étant régulièrement réparties et alignées en au moins une rangée et ayant leur axe choisi de manière à diriger l'air transversalement au flux de gaz s'échappant des deux rangées d'orifices (4) présentés par la cornière (19) susdite, les rampes (23) de la seconde paire étant disposées en dessous des parois inclinées (16), à proximité de leur intersection avec les parois latérales (15) susdites de plus faible hauteur, leurs ouvertures, analogues à celles de la première paire, ayant respectivement leur axe sensiblement parallèle à l'axe des ouvertures (24) des rampes de la première paire, l'enceinte, totalement ouverte à son sommet (8) pour faciliter l'enfournement et le défournement de la charge, étant obturée, de manière hermétique, par un couvercle amovible (3) agencé de manière à pouvoir être verrouillé en position de fermeture.

11. Installation suivant la revendication 10, caractérisée en ce que la trappe obturable (5) précitée, qui permet l'échappement de la vapeur de l'enceinte pendant la phase de séchage de la charge, est ménagée dans le couvercle (3) de l'enceinte.

12. Installation suivant l'une ou l'autre des revendications 10 et 11, caractérisée en ce que les moyens (11) précités, destinés à être alimentés par une source d'énergie d'appoint et agencés pour élever la température de la première enceinte (2) et celle de la charge (1) qu'elle contient, lors du démarrage du procédé susdit et jusqu'à l'émission par la charge des gaz combustibles précités, sont constitués soit par au moins deux rampes à gaz fixes (25) disposées parallèlement aux rampes à air susdites en dessous des parois inclinées précitées et pouvant être raccordées, de manière amovible à une conduite d'alimentation en gaz, soit par des brûleurs à mazout amovibles se fixant dans des ouvertures obturables ménagées dans les prois latérales (14) précitées de plus grande hauteur, en dessous des parois inclinées (16) précitées.

13. Installation suivant l'une quelconque des revendications 10 à 12, caractérisée en ce que les rampes (22 et 23) précitées distribuant l'air dans le flux de gaz s'échappant de l'enceinte sont agencées de manière à permettre le réglage du débit d'air.

14. Installation suivant l'une quelconque des revendications 10 à 13, caractérisée en ce que les ouvertures (24) ménagées dans les rampes (22 et 23) précitées distribuant l'air ont des sections qui varient à intervalles réguliers de manière à créer des turbulences dans l'air distribué afin de favoriser le mélange air/gaz susdit.

15. Installation suivant l'une quelconque des revendications 8 à 14, caractérisée en ce que les moyens précités, agencés pour guider le mélange air/gaz enflammé et les gaz chauds produits par sa combustion le long des parois de l'enceinte, sont constitués par une cloche (6) destinée à coiffer entièrement une enceinte (2, 2' et 2'') lorsque cette dernière est en phase de séchage et en phase carbonisation de sa charge, de sorte que l'installation comprend, pour au moins trois enceintes (2, 2' et 2''), deux cloches semblables pouvant être superposées de manière à pouvoir coopérer avec deux enceintes superposées, chacune de ces cloches présentant, à sa partie supérieure, une ouverture centrée pour soit permettre le passage et la répartition des gaz chauds de la cloche inférieure dans la cloche supérieure lorsque les cloches sont superposées, soit permettre l'échappement, vers l'athmosphère, des gaz après qu'ils aient transmis leurs calories à l'enceinte logée dans la cloche supérieure, des ouvertures (28) étant prévues dans les cloches pour livrer passage aux moyens (9) prévus sur les enceintes pour distribuer l'air nécessaire au mélange air/gaz précité, ainsi que des ouvertures obturables (29) livrant temporairement passage aux moyens (11) précités alimentés par une source d'énergie d'appoint et agencés pour élever la température de l'enceinte et celle de la charge qu'elle contient.

16. Installation suivant la revendications 15, caractérisée en ce que les cloches (6) susdites sont, lorsqu' elles coopèrent avec des enceintes en forme de parallélipipède droit, également en forme de parallélipipède droit, leurs dimensions intérieures étant telles qu'un espace important destiné au passage du mélange air/gaz enflammé et aux gaz chauds produits par la combustion dudit mélange, subsiste au moins entre les faces internes de la cloche et les parois latérales de l'enceinte qui sont parallèles aux rampes à air (22, 23) précitées ainsi qu'entre ces faces internes et le couvercle (3) de l'enceinte, l'ouverture centrée (27) susdite prévue à la partie supérieure des cloches étant réalisée dans leur paroi supérieure, cette ouverture (27) de forme rectangulaire, s'étendant suivant une direction parallèle aux rampes à air (22, 23) susdites, sur pratiquement toute la dimension correspondante de la paroi supérieure de la cloche, l'autre dimension de l'ouverture étant au moins égale au double de la distance séparant les faces internes de la cloche, d'une part, des parois latérales (15) précitées de l'enceinte parallèle aux rampes à air et, d'autre part, de couvercle (3) de l'enceinte, cette distance, qui est pratiquement constante, et la section de l'ouverture (27) ménagée dans la paroi supérieure de la cloche étant telles que la cloche fonctionne à la manière d'une cheminée dans laquelle s'établit le tirage naturel précité.

17. Installation suivant la revendication 16, caractérisée en ce qu'au moins les parois latérales (30) des cloches, parallèles aux rampes à air (22, 23) précitées des enceintes, ont leurs faces internes pourvues d'une isolation constituée d'au moins une couche de matériau réfractaire (31).

18. Installation suivant l'une quelconque des revendications 7 à 17, caractérisé en ce que les enceintes (2, 2' et 2'') sont entièrement métalliques, l'armature des cloches (6) étant également métalliques.

## Claims

1. Process for the carbonisation of materials releasing combustible gasses in the course of the carbonisation such as, in particular, process for the carbonisation of wood sheltered from air for obtaining charcoal, according to which the combustible gasses are recovered and burned for the purpose of increasing the temperature of the wood, with the said process characterised in that it consists in arranging a charge of wood (1) in a first chamber (2) that can be closed and is provided, at its base, with through-flow apertures (4) for the gasses that will be generated in the charge of wood when the temperature of the latter is increased, in submitting the chamber (2) and its wood charge (1) , either through the combustion of part of the charge contained in the chamber or through an input of calories supplied from outside the chamber via the combustion of a solid or fluid auxiliary fuel, to a temperature increase that ensures firstly and partly, at least, the drying of the wood charge and then, when the temperature of the charge is comprised in the range from 250° to 300°C, the start of the carbonisation of the charge taking place, sheltered from the air, while releasing the said combustible gasses that escape through the said apertures (4) of the chamber, in interrupting the supply of calories, in bringing into contact with the gasses escaping from the chamber , air in an amount sufficient for making an air/gas mixture that ignites spontaneously, in channelling the mixture ignited and the hot gasses resulting from the combustion of the mixture in contact with a significant part, at least, of the surface area of the walls of the chamber so as to bring the charge contained in the latter progressively to a temperature comprised in the range from 450° to 550°C, in superposing on the said first chamber (2), at least from the moment when the said supply of calories to the latter is interrupted, a second chamber (2') similar to the first and that contains a wood charge, in channelling the hot gasses flowing along the walls of the first chamber (2) so that they flow in contact with a significant part, at least, of the surface area of the walls of the second chamber (2' ) for the purpose of drying at least partly the charge thereof, and of bringing it to a temperature comprised in the range from 250° to 300°C, at which occurs the start of the carbonisation and the emission of combustible gasses, in bringing the air into contact with the gasses escaping from the second chamber (2'), in order to produce the said spontaneously igniting air/gas mixture, in separating the first and second chambers (2 and 2') , in superposing on the second chamber (2') a third chamber (2'') similar to the other two so that these second and third chambers (2' and 2'') reproduce the same cycle as that of the first and second chambers (2 and 2''), in damping automatically the carbonisation of the charge of the first chamber (2) by means of the residual gasses existing in the latter and through the absence of air in the chamber, the air inlet being practically zero through the apertures (4) made in the base of the chamber for the purpose of evacuating the gasses generated by the charge during the increasing of the latter's temperature, in discharging the charcoal after the dampening and cooling of the first chamber (2) and of its contents, in charging wood into the first chamber (2), in superposing it on the third chamber (2''), in separating the latter from the second chamber (2'') so that the latter may enter into its damping, cooling, discharging and charging phases, etc..

2. Process according to claim 1, characterized in that the vapour produced by the charge while its temperature is increasing will be released at the top of the chambers the charge of which is drying and during the drying phase, at least up to the moment when the moisture of this charge is of the order of 10 % of the dry weight.

3. Process according to either of claims 1 and 2, characterized in that two chambers are insulated while they are superposed to insure the drying and the carbonisation of their charge, in such a manner as to form a chimney that encircles the said chambers and that the said ignited air/gas mixture and the said hot gasses resulting from the combustion of the said mixture in the chimney (7) and remaining between the chambers and their insulation are being channelled.

4. Process according to claim 3, characterized in that the space comprised between the two superposed chambers (2) and their insulation (6) is determined so as to form a chimney (7) in which we obtain a natural draught sufficient, on one hand, for insuring a satisfactory ascending movement of the ignited air/gas mixture and of the said hot gasses and, on the other hand, for creating an in-draught proportionate to the amount and to the pressure of the gasses escaping from the chambers through said apertures (4).

5. Process according to either of the claims 1 to 4, characterized in that the air inlet is controlled in the air/gas mixture and in the said hot gasses.

6. Process according to claim 5, characterized in that the air inlet is controlled so as to have the combustion of the air/gas mixture occur in excess air.

7. Installation for the implementation of the process according to either of the claims 1 to 6, characterized in that it comprises three similar, mobile and interchangeable chambers (2, 2' and 2''), at least, arranged so that carbonisation takes place sheltered from the air and each of which displays a sealable opening (8) for the purpose of feeding the charge to be subjected to carbonisation and for removing the charcoal, apertures (4) distributed evenly and provided near their base so as to allow the escape of the gasses produced by the charge when the temperature of the same is being increased, means (9) fitted outside the chamber, close to the said apertures (4) and arranged for the purpose of feeding, on one hand, air into the gas flow escaping from the chamber through said apertures and, on the other hand, of ensuring the intimate air/gas mixture, means (6, 6' ) for guiding this mixture that ignites spontaneously and the hot gasses produced by its combustion along the walls of the chamber, with the installation comprising means (10) for handling the chambers (2, 2' and 2'') which are designed, in particular, for superposing the chambers and for separating the chambers that are superposed.

8. Installation according to claim 7, characterized in that one of the chambers (2, 2' and 2''), at least, comprises on the outside and close to its base, means (11) destined to be supplied by an auxiliary energy source and designed to increase the temperature of the chamber and that of the charge contained therein.

9. Installation according to either one of the claims 7 and 8, characterized in that each of the chambers (2, 2' and 2'') comprises, in its top section, one sealable hatch (5), at least, destined to allow, when it is open, the escape of part at least, of the vapour produced during the drying phase of the charge that precedes the carbonisation of the latter.

10. Installation according to either one of claims 7 to 9, characterized in that the chambers have the general form of a straight parallelepiped, with two opposite lateral walls (14) of each chamber being plane, square or rectangular and their height corresponding to the height of the chamber, with the other two lateral walls (15) of the chamber, which are also plane and rectangular, having a height less than that of the said two lateral walls (14), with the bottom portion of the chamber being formed by two plane, equal and rectangular walls (16) inclined according to a same angle toward the base of the chamber so as to form a hopper, and which are connected to the base of the two opposite lateral walls (15) of lesser height and to the two other opposite lateral walls (14), a space (17) that remains between these inclined walls (16) along their bottom edge (18), with this space (17) being sealed off by a corner iron (19), the section considered in parallel with the lateral walls (14) of greater height being V-shaped with its ridge (20) located at a level lower than the level of the bottom edges (18) of the inclined walls (16), the escape apertures (4) for the said gasses being distributed evenly and aligned in one row, at least, in each of the wings (21) of this corner iron, with the said air-distributing means consisting of two pairs of fixed rows (22 and 23) that extend between the lateral walls of greater height and that are arranged in parallel with the ridge (20) of the corner iron, the rows (22) of the first pair being arranged underneath the said corner iron (19), on both sides and equidistant from the latter, the openings of these rows (22) being distributed evenly and aligned in one row, at least, and with their centreline chosen so as to direct the air transversely as compared to the gas flow escaping from the two rows of apertures (4) displayed by the said corner iron (19), the rows (23) of the second pair being arranged underneath the said inclined walls (16), close to their point of intersection with the said lateral walls (14) of lesser height, their openings that are the same as those of the first pair, having their centreline, respectively, more or less in parallel with the centreline of the openings (24) of the rows of the first pair, with the chamber left entirely open at its top (8) so as to ease feeding and removing the charge, being sealed hermetically by means of a removable cover (3) designed so that it can be locked in its closed position.

11. Installation according to claim 10, characterized in that the said sealable hatch (5) that allows the vapour to escape from the chamber during the drying phase of the charge, is arranged in the cover (3) of the chamber.

12. Installation according to either one of the claims 10 and 11, characterized in that the said means (11) destined to be supplied by an auxiliary energy source and designed to increase the temperature of the first chamber (2) and that of the charge (1) contained therein at the start-up of the said process and until the charge emits the said combustible gasses, consist either of two fixed gas rows (25), at least, arranged in parallel with the said air rows underneath the said inclined walls and that can be removably connected to a gas supply line, or of removable fuel burners that can be fitted into the sealable openings arranged in the said lateral walls (14) of greater height, underneath the said inclined walls (16).

13. Installation according to either one of the claims 10 to 12, characterized in that the said rows (22 and 23) feeding air into the gas flow escaping from the chamber are designed so as to allow for controlling the air output.

14. Installation according to either one of the claims 10 to 13, characterized in that the openings (24) arranged in the said rows (22 and 23) supplying air have cross-sections that vary at regular intervals so as to create turbulence in the air supplied in order to assist the said air/gas mixture.

15. Installation according to either one of the claims 8 to 14, characterized in that the said means designed to guide the ignited air/gas mixture and the hot gasses produced by its combustion along the walls of the chamber consist of a bell (6) destined to cover entirely one chamber (2, 2' and 2'') when the latter is in the drying phase and in the carbonising phase of its charge, so that the installation comprises for three chambers (2, 2' and 2''), at least, two similar bells that can be superposed so as to be able to co-operate with two superposed chambers, each of these bells displaying, in its top section, an opening centred so as to either allow for the through-flow and the distribution of the hot gasses from the bottom bell into the top bell while the bells are superposed, or allow for the escape, into the atmosphere, of the gasses after these have transmitted their calories to the chamber lodged in the top bell, with openings (28) being provided in the bells to allow passage to the means (9) provided at the chambers for the purpose of distributing the air needed for the said air/gas mixture, as well as sealable openings (29) that allow temporarily passage to the said means (11) supplied by an auxiliary energy source and designed so as to increase the temperature of the chambers and that of the charge contained therein.

16. Installation according to claim 15, characterized in that said bells (6) have, when they are cooperating with the chambers in the form of a straight parallelepiped, also the form of a straight parallelepiped, with their inside dimensions such that a large space destined for the through-flow of the ignited air/gas mixture and of the hot gasses produced by the combustion of the said mixture, remains, at least, between the inside surfaces of the bell and the lateral walls of the chamber which are parallel to the said air rows (22, 23) as well as between these inside surfaces and the cover (3) of the chamber, with the said centred opening (27) provided in the top section of the bells being made in their top wall, this opening (27) of rectangular form extending according to a direction parallel to the said air rows (22, 23) over practically the entire corresponding dimension of the top wall of the bell, the other dimension of the opening being equal, at least, to twice the distance separating the inside surfaces of the bell, on one hand, from the said lateral walls (15) of the chamber parallel to the air rows and, on the other hand, from the cover (3) of the chamber, with this practically constant distance and the cross-section of the opening (27) made in the top wall of the bell being such that the bell functions like a chimney in which occurs the said natural draught.

17. Installation according to claim 16, characterized in that the lateral walls (30), at least, of the bells and which are parallel to the said air rows (22, 23) of the chambers, have their inside surfaces provided with a insulation that consists, at least, of one coat of fireproof material (31).

18. Installation according to either one of the claims 7 to 17, characterized in that the chambers (2, 2' and 2'') are entirely made of steel, with the mountings of the bells (6) also being made of steel.

## Patentansprüche

1. Verkohlungsverfahren von Materialien, das bei der Verkohlung Verbrennungsgase freisetzt, insbesondere das Verkohlungsverfahren von Holz unter Luftabschluß für die Gewinnung von Holzkohle, bei dem die freigesetzten Verbrennungsgase zurückgewonnen und verbrannt werden, um die Temperatur des Holzes zu erhöhen, wobei das besagte Verfahren
**dadurch gekennzeichnet ist,**
es darin besteht, eine Charge Holz (1) in einen ersten Schutzbehälter (2) zu legen, der geschlossen werden kann und an seiner Basis Durchgangsöffnungen (4) für die in der Holzcharge erzeugten Gase besitzt, wenn in dieser die Temperatur erhöht wird, um den Schutzbehälter (2) und seine Holzcharge (1), sei es durch Verbrennung eines Teils der Charge, die im Schutzbehälter enthalten ist oder sei es durch eine Zuführung von Kalorien, die außerhalb des Schutzgehäuses durch Verbrennung eines festen oder flüssigen Verbrennungszusatzes erzeugt werden, einer Temperaturzuerhöhung unterwerfen, die zuerst zumindest teilweise eine Trocknung des Holzes sicherstellt und dann, wenn die Temperatur zwischen 250° und 300°C liegt, die Verkohlung beginnt, die unter Luftabschluß abläuft und die obengenannte Gase freisetzt, die durch erwähnten Öffnungen (4) im Schutzbehälter entweichen, die obengenannte Zuführung von Kalorien zu unterbrechen, die aus dem Behälter entweichenden Gase mit der Luft in Kontakt zu bringen und zwar in ausreichender Menge, so daß ein Luft-Gas-Gemisch entsteht, das sich spontan entzündet, das entzündete Gemisch und die heißen Gase, die durch die Verbrennung des Gemisches entstehen, mindestens auf einen wesentlichen Teil der Oberfläche der Wände des Schutzbehälters zu leiten, um die enthaltene Charge kontinuierlich zu einer Temperatur zwischen 450° und 550°C zu führen, auf den ersten Schutzbehälter (2) mindestens zu dem Zeitpunkt, wo die besagte Kalorienzufuhr im letzteren unterbrochen wird, einen zweiten Schutzbehälter (2') aufzusetzen, der dem ersten ähnlich ist und eine Charge Holz enthält, die heißen Gase, die sich entlang der Wände des erstens Behälters (2) bewegen so zuleiten, daß sie mindestens auf einen wesentlichen Teil der Wände des zweiten Behälters (2') gelangen, damit zumindest ein Teil dieser Charge getrocknet und auf eine Temperatur zwischen 250° und 300°C gebracht wird, bei der die Verkohlung und der Ausstoß der Verbrennungsgase einsetzt, die entweichenden Gase aus dem zweiten Schutzbehälter (2') mit der Luft in Kontakt zu bringen, um das vorher genannte Luft-Gas-Gemisch zu bilden, das sich spontan entzündet, den ersten und zweiten Schutzbehälter voneinander zu trennen, werden (2 und 2') dem zweiten Schutzbehälter (2') einen dritten Schutzbehälter (2'') aufzusetzen, der den beiden anderen gleicht, damit der gleiche Zyklus reproduziert wird wie mit dem ersten und zweiten Behälter (2 und 2'), die Verkohlung der Charge des ersten Schutzbehälters (2) aufgrund der vorhandenen Restgase und nicht vorhandenen Luft im Schutzbehälter von selbst ersticken zu lassen, wobei der Lufteintritt durch die am Boden befindlichen Öffnungen (4) des Schutzbehälters für die Ableitung der durch die Charge bei der Erhöhung ihrer Temperatur erzeugten Gase, praktisch bei Null liegt, die Holzkohle nach dem Ersticken und Abkühlen aus dem ersten Behälter (2) zu entleeren, Holz im ersten Behälter (2) nachzufüllen, diesen auf den dritten Schutzbehälter (2'') aufzusetzen, diesen vom zweiten Schutzbehälter (2') zu trennen, damit letzterer in seine Phase Erstickung, Abkühlung, Entleerung und Beschickung usw. eintritt.

2. Verfahren gemäß Anspruch 1,
**dadurch gekennzeichnet,**
daß der durch die Charge bei der Erhöhung der Temperatur erzeugte Wasserdampf, im oberen Teil des Behälters, in dem die Trocknung der Charge im Verlauf ist und während der Trocknungsphase, zumindest bis zu dem Moment, wo die Feuchtigkeit dieser Charge bei einer Größenordnung von 10 % der Trockenmasse liegt, abgelassen wird.

3. Verfahren gemäß einem dar Ansprüche 1 oder 2,
**dadurch gekennzeichnet**,
daß man 2 Schutzbehälter isoliert während sie aufgesetzt sind um die Trocknung und Verkohlung ihrer Charge sicherzustellen, und zwar so, daß sich ein Kamin bildet, der die besagten Schutzbehälter umhüllt und daß man das oben genannte entzündete Luft-Gas-Gemisch und die vorerwähnten heißen Gase, die durch die Verbrennung des besagten Gemisches entstehen in den Kamin (7) leitet, welcher zwischen den Schutzgehäusen und ihrer Isolierungen liegt.

4. Verfahren gemäß Anspruch 3,
**dadurch gekennzeichnet**,
daß man den Raum definiert, der zwischen den beiden aufeinandergesetzten Schutzbehältern (2) und ihrer Isolierung (6) liegt, damit ein Kamin (7) ausgebildet wird, in dem ein natürlicher Zug entsteht, der ausreicht, um einerseits eine ausreichende, aufsteigende Bewegung des entzündeten Luft-Gas-Gemisches und der vorher genannten heißen Gase sicherzustellen, und um andererseits einen Lufteinzug zu schaffen, der der Menge und dem Druck der den Schutzbehältern durch die genannten Öffnungen (4) entweichenden Gase proportional ist.

5. Verfahren gemäß einem der Ansprüche 1 bis 4,
**dadurch gekennzeichnet**,
daß man die Luftzufuhr in das Luft-Gas-Gemisch und die genannten heißen Gase reguliert.

6. Verfahren gemäß Anspruch 5,
**dadurch gekennzeichnet**,
daß man die Luftzufuhr regelt, damit die Verbrennung des Luft-Gas-Gemisches mit einem Überschuß an Luft abläuft.

7. Vorrichtung für die Durchführung des Verfahrens gemäß einem der Ansprüche 1 bis 6,
**dadurch gekennzeichnet**,
daß mindestens drei gleiche, bewegliche und untereinander austauschbare Schutzbehälter (2, 2' und 2'') vorhanden sind, die so ausgelegt sind, daß die Verbrennung unter Luftabschluß abläuft und daß jeder eine verschließbare Öffnung (8) für die Beschickung der zur Verbrennung kommenden Charge und die Entleerung der Holzkohle besitzen, das Öffnungen (4) vorhanden sind, die regelmäßig verteilt in der Nähe ihrer Basis liegen, um ein Entweichen der durch die Charge erzeugten Gase bei der Erhöhung ihrer Temperatur, zu ermöglichen, daß Mittel (9) außerhalb des Schutzbehälters in der Nähe der genannten Öffnungen (4) vorhanden sind, die einerseits die Funktion ausführen, die Luft in dem durch die genannten Öffnungen dem Behälter entweichenden Gasfluß zu verteilen, und andererseits ein dichtes Luft-Gas-Gemisch sicherzustellen, daß Mittel (6, 6') vorhanden sind, um dieses Gemisch, das sich spontan entzündet und die durch ihre Verbrennung erzeugten heißen Gase entlang der Wände des Schutzbehälters zu leiten, wobei die Vorrichtung Mittel (10) für die Handhabung der Schutzbehälter (2, 2' und 2'') aufweist, die im besonderen dazu dienen, die Schutzbehälter aufeinander zu setzen und die aufeinandergesetzten Schutzbehälter zu trennen.

8. Vorrichtung gemäß Anspruch 7,
**dadurch gekennzeichnet**,
daß mindestens einer der Schutzbehälter (2, 2' und 2'') außerhalb, in der Nähe seiner Basis, Mittel (11) besitzt, die dazu bestimmt sind, durch eine zusätzliche Energiequelle versorgt zu werden und so ausgelegt sind, um die Temperatur des Schutzbehälters und der Charge, die er enthält, zu erhöhen.

9. Vorrichtung gemäß dem einem oder dem anderen der Ansprüche 7 und 8,
**dadurch gekennzeichnet**,
daß jeder der Schutzbehälter (2, 2' und 2'') an seinem oberen Teil mindestens eine verschließbare Klappe (5) besitzt, die, wenn sie geöffnet ist, das Entweichen, zumindest eines Teiles, des während der Trocknungsphase der Charge die ihrer Verkohlung vorausgeht erzeugten Wasserdampfes, ermöglicht.

10. Vorrichtung, gemäß einem der Ansprüche 7 bis 9,
**dadurch gekennzeichnet**,
daß die Schutzbehälter im allgemeinen die Form eines Quaders besitzen, wobei zwei seitlich gegenüber liegende Wände (14) jedes Behälters eben, quadratisch oder rechtwinkelig sind und ihre Höhe der Höhe des Schutzbehälters entspricht, und die beiden anderen seitlichen Wände (15) des Schutzbehälters ebenfalls eben und rechtwinkelig sind und eine etwas geringere Höhe im Vergleich zu den beiden seitlichen Wänden (14) besitzen, wobei der Boden des Behälters aus zwei ebenen, gleichen und rechtwinkeligen Wänden (16) besteht, die sich im gleichen Winkel zur Basis des Schutzbehälterz neigen und einen Trichter bilden und die sich an die Basis der beiden gegenüberliegenden, seitlichen Wände (15) mit geringerer Höhe und die beiden anderen seitlichen Wände (14) anschließen, wobei entlang der unteren Kante (18) der geneigten Wände (16) ein Zwischenraum (17) vorhanden ist, der durch ein Winkeleisen (19) verschlossen ist, dessen Schnitt parallel zu den höheren, seitlichen Wänden (14) die Form eines V besitzt, wobei der Grat (20) unterhalb der unteren Ränder (18) der geneigten Wände (16) liegt, daß die Auslaßöffnungen (4) für die genannten Gase regelmäßig und mindestens in einer Reihe jedes Flügels (21) dieses Winkeleisens verteilt sind, daß die genannten Vorrichtungen zur Verteilung der Luft aus zwei Paar festen Brennern (22 und 23) bestehen, die sich zwischen den seitlichen Wänden mit größerer Höhe erstrecken und parallel zum Grat (20) des Winkeleisens angeordnet sind, daß die Brenner (22) des ersten Paares unterhalb des oben genannten Winkeleisens (19) untergebracht sind, und zwar mit gleichem Abstand zu letzterem, daß die Öffnungen dieser Brenner (22) mindestens in einer Reihe gleichmäßig verteilt und ausgerichtet sind, wobei ihre Achse so liegt, daß die Luft quer zum Gasfluß, der aus den beiden Reihen von Öffnungen (4) im oben genannten Winkeleisen (19) austritt, geleitet wird, daß die Brenner (23) des zweiten Paares unterhalb der geneigten Wände (16), in der Nähe ihres Zusammentreffens mit den seitlichen Wänden (15) mit geringerer Höhe angeordnet sind, daß die Öffnungen analog des ersten Paares ihre Achse genau parallel zur Achse der Öffnungen (24) der Brenner des ersten Paares haben, daß der Schutzbehälter an seinem oberen Teil (8) komplett geöffnet ist, um die Beschickung und Entleerung der Charge zu erleichtern und durch einen beweglichen Deckel (3), der in Verschlußposition verriegelt und hermetisch verschlossen werden kann.

11. Vorrichtung gemäß Anspruch 10,
**dadurch gekennzeichnet**,
daß die genannte verschließbare Klappe (5), die das Entweichen von Wasserdampf aus dem Schutzbehälter während der Trocknungsphase der Charge ermöglicht, im Deckel (3) des Schutzbehälters untergebracht ist.

12. Vorrichtung gemäß einem der Ansprüche 10 und 11,
**dadurch gekennzeichnet**,
daß die genannten Mittel (11), die dazu bestimmt sind, zusätzliche Energie zuzuführen und so beschaffen sind, daß die Temperatur des ersten Schutzbehälters (2) und seiner Charge (1), die er enthält, bei Initiierung des oben erwähnten Verfahrens bis zur Emission der durch die Charge entstehenden Verbrennungsgase erhöht werden kann, sei es aus mindestens zwei festen Gasbrennern (25), die parallel zu den Luftbrennern angeordnet sind und unterhalb der genannten geneigten Wände liegen und mit einer flexiblen Gaazufuhrleitung verbunden werden können, sei es durch bewegliche Ölbrenner, die in den verschließbaren Öffnungen befestigt werden, die sich in den genannten seitlichen, höheren Wänden (14) unterhalb der geneigten Wände (16) befinden, bestehen.

13. Vorrichtung gemäß einem der Ansprüche 10 bis 12,
**dadurch gekennzeichnet**,
daß die genannten Brenner (22 und 23), die die Luft in den Fluß der dem Behälter entweichenden Gase verteilen, eine Luftdurchsetzregulierung ermöglichen.

14. Vorrichtung gemäß einem der Ansprüche 10 bis 13,
**dadurch gekennzeichnet**,
daß die in den Brennern (22 und 23) befindlichen Öffnungen (24), die für Verteilung der Luft sorgen, Querschnitte haben, die in regelmäßigen Abständen variieren und so in der verteilten Luft Turbulenzen schaffen, damit das obengenannte Luft-Gas-Gemisch günstig beeinflußt wird.

15. Vorrichtung gemäß einem der Ansprüche 8 bis 14,
**dadurch gekennzeichnet**,
daß die vorgenannten Mittel, die das entzündete Luft-Gas-Gemisch und die heißen Gase, die durch die Verbrennung erzeugt wurden, entlang der Behälterwände leiten, als Glocke (6) ausgebildet sind, die dazu bestimmt ist, einen Schutzbehälter (2, 2' und 2'') volletändig zu bedecken, wenn dieser in der Trocknungsphase und in der Verbrennungsphase seiner Charge ist, so daß die Vorrichtung mindestens drei Schutsbehälter (2, 2', 2''), zwei gleiche Glocken, die so aufeinandergesetzt werden können, daß sie mit zwei aufeinandergesetzte Schutzbehälter zusammenwirken, wobei jede dieser Glocken an ihrem oberen Teil eine zentrierte Öffnung besitzt, um den Durchgang und die Verteilung der heißen Gase der unteren Glocke in die obere Glocke zu ermöglichen, wenn die Glocken aufeinandergesetzt sind und um die Entweichung der Gase in die Atomsphäre zu ermöglichen, nachdem sie ihre Kalorien auf den in der oberen Glocke untergebrachten Schutzbehälter übertragen haben, Öffnungen (28), die in den Glocken vorgesehen sind, um zu den auf den Schutzbehältern vorgesehenen Vorrichtungen (9) Durchlaß zu schaffen, so daß die benötigte Luft im genannten Luft-Gas-Gemisch verteilt wird, desweiteren verschließbare Öffnungen (29), die vorübergehend Durchlaß zu den genannten Vorrichtungen (11) schaffen, die über eine Energiequelle versorgt werden und so die Temperatur des Schutzbehälters und der darin enthaltenen Charge zu erhöhen, umfaßt.

16. Vorrichtung gemäß Anspruch 15,
**dadurch gekennzeichnet**,
daß die oben erwähnten Glocken (6), wenn sie mit den quaderförmigen Schutzbehältern zusammenwirken, ebenfalls die Form eines Quaders besitzen und ihre inneren Abmessungen so sind, daß ein wesentlicher Teil des Raums für die Durchführung des entzündeten Luft-Gas-Gemisches und der durch die Verbrennung des besagten Gemisches erzeugten heißen Gase, dient, mindestens zwischen den inneren Flächen der Glocke und den seitlichen Wänden des Schutzbehälters, die zu den genannten Luftbrennern parallel sind und ebenso zwischen diesen inneren Flächen und dem Deckel (3) des Schutzbehälters gebildet wird, daß die oben genannte zentrierte Öffnung (27) am oberen Teil der Glocken vorgesehen ist und in rechtwinkeliger Form aufweist und sich in paralleler Richtung zu den oben genannten Luftbrennern (22, 23) auf praktisch jeder entsprechenden Abmessung der oberen Wand der Glocke erstreckt, wobei die andere Abmessung der Öffnung einerseits mindestens gleich dem doppelten der Entfernung, die die inneren Flachen der Glocke voneinander trennt ist und die genannten seitlichen Wände (15) des Schutzbehälters parallel zu den Luftbrennern erstrecken und andererseits ist dieser Abstand des Deckels (3) des Schutzbehälters praktisch konstant und der Querschnitt der Öffnung (27), die sich in der oberen Wand der Glocke befindet, ist so, daß die Glocke wie ein Kamin arbeitet und sich darin ein natürlicher Abzug einstellt.

17. Vorrichtung gemäß Anspruch 16,
**dadurch gekennzeichnet**,
daß zumindest die seitlichen Wände (30) der Glocken, die parallel zu den genannten Luftbrennern (22, 23) verlaufen ihre inneren Flächen mit einer Isolierung verkleidet haben, die zumindest aus einer Lage hitzebeständigem Materials (31) besteht.

18. Vorrichtung gemäß einem der Ansprüche 7 bis 17,
**dadurch gekennzeichnet**,
daß die Schutzbehälter (2, 2' und 2'') vollständig aus Metall sind ebenso das Gerüst der Glocken (6).
